(19) Europäisches Patentamt
European Patent Office
Office européen des brevets

(11) **EP 3 273 787 B1**

(12) **EUROPEAN PATENT SPECIFICATION**

(45) Date of publication and mention of the grant of the patent:
**24.04.2019 Bulletin 2019/17**

(21) Application number: **16711686.2**

(22) Date of filing: **24.03.2016**

(51) Int Cl.:
*A23C 9/13* *(2006.01)*          *A23C 9/137* *(2006.01)*
*A23C 19/076* *(2006.01)*

(86) International application number:
**PCT/EP2016/056672**

(87) International publication number:
**WO 2016/151122 (29.09.2016 Gazette 2016/39)**

(54) **AERATED DAIRY PRODUCT**

AUFGESCHÄUMTES MILCHPRODUKT

PRODUIT LAITIER AERE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2015 EP 15160655**

(43) Date of publication of application:
**31.01.2018 Bulletin 2018/05**

(73) Proprietor: **Nestec S.A.**
**1800 Vevey (CH)**

(72) Inventor: **CHETIOUI, Aurore Celine**
**27000 Evreux (FR)**

(74) Representative: **Cogniat, Eric Jean Marie**
**Nestec S.A.**
**Avenue Nestlé 55**
**1800 Vevey (CH)**

(56) References cited:
**EP-A1- 1 852 018          CH-A- 501 368**
**DE-A1- 19 654 625          FR-A1- 2 850 534**
**GB-A- 2 252 228          US-A1- 2006 068 075**

- **DATABASE FSTA [Online] INTERNATIONAL FOOD INFORMATION SERVICE (IFIS), FRANkFURT-MAIN, DE; 1978, "Manufacture of frozen yoghurt confectionery. (translated)", XP002742351, Database accession no. FS-1978-10-P-1551 & PECK, DULOVA, TEPLY: CZECHOSLOVAK PATENT, 1977, CZECHOSLOVAK PATENT**
- **DATABASE GNPD [Online] MINTEL; June 2013 (2013-06), ANONYMOUS: "PEAR & CAMPAGNE CREAM CHEESE & FRUIT DESSERT", XP002742352, retrieved from WWW.GNPD.COM Database accession no. 2097263**

## Description

### TECHNICAL FIELD

The present invention relates generally to the field of dairy products and processes for their manufacture. For example, the present invention relates to processes for the manufacture of aerated dairy products.

### BACKGROUND OF THE INVENTION

FR 2850534 A1 relates to a yogurt with a two-phase structure and to a method for its production. The yogurt is manufactured by mixing about 75.5% of a standard yogurt bulk with 10.5% homogenised 40% fat cream and 14% of a vanilla-flavoured preparation with chocolate chips. Cream is homogenised at a pressure of 20.5 MPa (205 bar). This product is not aerated.

EP 1733622 B1 relates to a method of manufacture of a cultured cream cheese. In these methods, a dairy mix is prepared by mixing milk and cream to reach a fat content of 10% by weight. The dairy mix is then homogenised in a two-step homogenisation, pasteurised and cooled, before fermentation with a lactic acid producing bacterial culture until a pH of 4.35 is reached. A mix of salts, hydrocolloids and whey is then added to the fermented dairy mix before a homogenisation at 20.7 MPa and a heat treatment at about 80°C for 60 minutes. The final product contains 20-30% proteins from the cultured mixture, and 70-80% from the uncultured mixture. The blend can then be whipped to about 20% overrun. The resulting product is a spreadable cultured cream cheese with a thick texture.

WO 03/028471 A1 relates to a whipped yogurt product and to a method for its preparation. A yogurt base comprising water, skim milk powder, cream, sugar, starch and gelatine was homogenised and pasteurised. The base was then seeded with a starter culture, and fermented to a pH of 4.3. An emulsifier blend was added to the yogurt base in a ratio of emulsifier blend/yogurt base of 1:25. The hydrated emulsifier blend is added to the yogurt after fermentation in order to reduce yogurt gel and foam destabilisation issues. The emulsifier blend consisted of water, sodium stearyl lactylate, and a lactylated blend of mono- and diglycerides.

EP 0777969 A1 relates to an aerated sour food product and process for its preparation. The food product has an overrun of at least 25%, it is pourable, and it has a pH ranging from 3.0 to 5.2. The aerated food product is prepared by fermenting a standardised milk having a fat content of about 3%, and containing sugar, and different hydrocolloids such as modified starch, xanthan and gelatin. The fermented milk is then aerated in a MONDOMIX®.

US 2006/068075 A1 relates to a fermented dairy product composed of a fermented dairy base containing active cultures and a low water activity chocolate base admixed within the fermented dairy base. The fermented dairy product may be a fermented mousse.

CS 172 A6 (Czechoslovak Patent, XP-002742351) relates to the manufacture of a frozen yoghurt composition.

DE19654625 discloses the preparation of an aerated fermented dairy product wherein yogurt is mixed with whipped cream.

In addition, several commercial fermented dairy products exist, which have a foamed texture. For instance, fermented chilled dairy mousses have an aerated texture with many bubbles that remain in the spoon during consumption and they have a very stable and jellified protein network. Mild yogurts usually have a fat content higher than 10% by weight. Fermented dairy mousses with a fat content lower than 10% by weight usually have a jellified texture which can be identified by their clean cut when taking a spoonful for the product, and by the fact that they do not melt in the mouth during consumption. They have a rather thick texture that coats the mouth cavity.

It would therefore be desirable to provide a low-fat aerated dairy product with a mild taste and a smooth and light texture. It is also desirable that the dairy product has a sufficient shelf life under refrigerated conditions, without syneresis during shelf life. It is also desirable that the foam remains stable during shelf life.

Any reference to prior art documents in this specification is not to be considered an admission that such prior art is widely known or forms part of the common general knowledge in the field.

### SUMMARY OF THE INVENTION

The object of the present invention is to improve the state of the art, and in particular to provide a process that overcomes the problems of the prior art and addresses the needs described above, or at least to provide a useful alternative.

The inventors were surprised to see that the object of the present invention could be achieved by the subject matter of the independent claims. The dependent claims further develop the idea of the present invention.

Accordingly, an embodiment of the invention proposes a process for the manufacture of an aerated dairy product comprising 1.5% to 14% by weight of fat, preferably 4 to 8% by weight of fat, comprising the steps of:

- preparing a fermented dairy base comprising a stabiliser composition, said stabiliser composition comprising pectin, gelatine, cellulose, starch, hydrocolloids, or a mixture thereof,
- preparing a cream, and homogenising said cream under a pressure lower than 6 MPa (60 bar),
- whipping said fermented dairy base to an overrun of 25 to 130%, and/or whipping said cream to an overrun of 50 to 150%,
- mixing 60 to 90 parts by weight of said fermented dairy base, 10 to 40 parts by weight of said cream, and up to 30 parts by weight of a flavour composition, where either or both of said fermented dairy base and said cream are whipped before mixing.

An aerated dairy product comprising 1.5 to 14% by weight of fat, having an overrun of 10 to 60%, and a shelf life of 35 days in refrigerated conditions can thus be provided. The aerated dairy product may comprise 60 to 90 parts by weight of a fermented dairy base, 10 to 40 parts by weight of cream, and up to 30 parts by weight of a flavour composition.

These and other aspects, features and advantages of the invention will become more apparent to those skilled in the art from the detailed description of embodiments of the invention. The invention is as defined by the appended claims.

## DETAILED DESCRIPTION OF THE INVENTION

As used in the specification, the words "comprise", "comprising" and the like are to be construed in an inclusive sense, that is to say, in the sense of "including, but not limited to", as opposed to an exclusive or exhaustive sense.

As used in the specification, the word "about" should be understood to apply to each bound in a range of numerals. Moreover, all numerical ranges should be understood to include each whole integer within the range.

As used in the specification, the singular forms "a", "an", and "the" include plural referents unless the context clearly dictates otherwise.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

The term "emulsifiers" refers to non-dairy ingredients which are added to emulsions to stabilise them. Emulsifiers include, for instance, sodium stearyl lactylate, or lactylated blend of mono- and diglycerides.

The expression "low-fat" refers to a dairy composition comprising less than 14% by weight of fat, preferably less than 8% by weight of fat.

The "overrun" is an indication of the volume of gas incorporated into a product. The overrun (OR) is defined as:

$$OR = \frac{V_w - V_0}{V_0} x100$$

where $V_0$ is the initial volume of a mass $M$ of product, and $V_w$ is the volume of the same mass $M$ of product after incorporation of gas, for instance by whipping.

The term "refrigeration" or "refrigerated conditions" refer to a temperature of 0.5 to 8°C for the storage of the aerated dairy product, as can be found in a conventional refrigerator.

The term "shelf life" refers to the period of time between the date of production of the aerated dairy product and the recommended consumption date.

The term "aerated" refers to a dairy product which has an overrun of at least 10%, preferably at least 25%, and even more preferably at least 30%. Preferably, the overrun of the aerated dairy product is lower than 60%.

Accordingly, the invention relates to a process for the manufacture of an aerated dairy product comprising 1.5% to 14% by weight of fat. The aerated dairy product is prepared by mixing a fermented dairy base, such as a yogurt or quark, with homogenised cream, where either the fermented dairy base or the homogenised cream, or both, are whipped before mixing. Preferably, the fermented dairy base is stabilised, although it is also possible to use stabilised homogenised cream. The aerated dairy product has an overrun of 10 to 60%.

When developing these new processes for the manufacture of said dairy products the inventors have found that mixing a standard yogurt base with whipped cream is not a sustainable option because the mix is not stable and shows syneresis a few days after mixing. The inventors have also found that mixing a standard yogurt base, even with a high protein content, with a whipped pasteurised and stabilised cream still exhibits syneresis during shelf life.

Syneresis is a phenomenon during which a liquid, for instance water, drains from a gel. For instance, the liquid that can be observed in some yogurt containers is due to the syneresis phenomenon. When developing the dairy products according to the invention, an objective was to propose a recipe and a process that would mitigate syneresis over shelf life.

The preparation of the fermented dairy base is performed following standard dairy processes. A liquid dairy composition is prepared by mixing dairy ingredients. Preferably, the liquid dairy composition is standardised. "Standardised" refers to the fact that the protein content, fat content and total solids are adjusted to predetermined values. The liquid dairy composition further comprises a stabiliser composition. The liquid dairy composition is homogenised and pasteurised, and is then cultured.

Suitable dairy ingredients include milk, such as skim milk, low-fat milk, semi-skim milk, or full-fat milk, as well as milk components, such as milk solids, milk proteins, milk fat, cream and the like. Preferably, the liquid dairy composition is low-fat milk or skim milk. Skim milk is also called fat-free milk or no-fat milk. In a preferred embodiment, the liquid dairy composition is fat free. For instance, the dairy ingredients may be provided as a powder, as a liquid, or as a concentrate. In an embodiment, the dairy ingredients may be provided as a powder and mixed into water. Alternatively, the liquid dairy composition is prepared by mixing powdered dairy ingredients into liquid milk. For instance, the liquid dairy composition is prepared by mixing skim milk powder and milk proteins into liquid skim milk. Preferably, when powder dairy ingredients are used, they are mixed into a liquid and kept for hydration for 15 to 30 minutes, at about 60°C.

In addition to the dairy ingredients, the liquid dairy composition comprises a stabiliser composition. In an embodiment, the liquid dairy composition comprises 0.3 to 5 wt% of stabiliser composition.

Suitable stabilisers include pectin, gelatine, cellulose, starch, and hydrocolloids. Suitable hydrocolloids include agar-agar, carrageenans, and inulin. In an embodiment, the stabiliser composition comprises gelatine, preferably a high-molecular weight gelatine. The inventors have found that high-molecular weight gelatine prevents syneresis more efficiently. Without wishing to be bound by theory, the inventors believe that low-molecular weight gelatine may migrate more easily within the aerated dairy product and therefore will not protect it against syneresis. In another embodiment, the stabiliser composition comprises gelatine together with other stabilisers. Preferably, the stabiliser composition comprises, preferably consists of, gelatine and pectin. Preferably, the pectin is low-amidated ester pectin. In preferred embodiment, the stabiliser composition comprises high-molecular weight gelatine and low-amidated ester pectin. The stabiliser composition may be added as a powder or as a liquid.

Preferably, when powder ingredients are used, such as powder dairy ingredient or powder stabilisers, they are mixed into liquid milk or water, preferably liquid milk, and kept for hydration for 15 to 30 minutes, at about 60°C.

Preferably, the liquid dairy composition contains 12 to 20wt% milk solids, 4 to 7 wt% milk proteins. As mentioned above, the liquid dairy composition also comprises 0.3 to 5 wt%, preferably 0.4 to 4 wt%, and more preferably 0.5 to 3 wt%, of stabiliser composition.

The liquid dairy composition is pasteurised and homogenised using conventional methods and then cooled to a temperature of 20 to 45°C. For instance, pasteurisation is performed at 92°C for 6 minutes. Homogenisation can be a single-stage homogenisation or a two-stage homogenisation. For instance, homogenisation is a two-stage homogenisation performed at 200/20 bar at 70°C. Alternatively, homogenisation is a single-stage homogenisation performed at 220 bar at 70°C. Homogenisation can be performed upstream or downstream of pasteurisation. Preferably, homogenisation is performed after pasteurisation.

The liquid dairy composition is then cultured at a temperature and a time sufficient to reach a stable pH of 3.5 to 5.0, preferably of 4.0 to 4.8, using conventional lactic acid bacterial cultures and culturing conditions. For instance, the liquid dairy composition is cultured at a temperature of 30 to 45°C, preferably 35 to 40°C, for 6 to 15 hours, preferably 7 to 10 hours. The lactic acid bacterial cultures are added to the liquid dairy composition at a level of about 0.01 to 1 wt%.

Suitable lactic acid bacteria include *Bifidobacterium animalis, Bifidobacterium breve, Bifidobacterium infantis, Lactobacillus bulgaricus, Lactobacillus casei, Lactobacillus delbrueckii* ssp. *lactis, Lactobacillus delbrueckii* ssp. *bulgaricus, Lactobacillus helveticus, Lactobacillus lactis, Lactococcus lactis* ssp. *cremoris, Lactococcus lactis* ssp. *lactis, Leuconostoc lactis, Leuconostoc mesenteroides* and *Streptococcus thermophilus.* Preferably, the lactic acid bacteria are yogurt strains, namely *Lactobacillus delbrueckii* ssp. *Bulgaricus* and *Streptococcus thermophilus.* In another embodiment, the lactic acid bacteria as quark strains, such as *Lactococcus lactis, Leuconostoc lactis* or *Leuconostoc mesenteroides.*

A fermented dairy base is then obtained. For instance, the fermented dairy base is a yogurt or a quark. In an embodiment, the fermented dairy base is a mixture of a yogurt and a quark. Preferably, the fermented dairy base is yogurt, such as a skim-milk yogurt. Preferably, the fermented dairy base is a yogurt with a pH ranging from 4.0 to 4.8. Preferably, the fermented dairy base comprises less than 3 wt% of fat. In a preferred embodiment, the fermented dairy base is fat-free.

The fermented dairy base may then be smoothed and cooled to a temperature of 4 to 25°C, preferably 8 to 20°C, for storing or holding. Holding the fermented dairy base at a high temperature (at 20°C or higher) for a long period of time (18 hours or more) increases the texture of the fermented dairy base.

Optionally, the fermented dairy base comprises a flavour ingredient. Suitable flavour ingredients include vanilla flavour; chocolate; fruit extracts or flavours, such as strawberry or lemon flavours; herbal extracts or flavours, such as mint or verbena; sweetener, such as sucrose or low- or non-caloric sweeteners. In an embodiment, the fermented dairy base comprises up to 8wt% of added sucrose. Preferably, the flavour ingredient is added to the liquid dairy composition prior to pasteurisation.

Optionally, the fermented dairy base is whipped to an overrun of 25 to 130%, such as 40 to 100%, and preferably below 60%. A standard aeration mixer can be used for whipping the fermented dairy base. Suitable equipment includes aeration mixers supplied by AEROMIX or MONDOMIX.

The preparation of the cream is performed following standard dairy processes. Cream is an oil-in-water emulsion where the oil phase comprises milk fat (also named butterfat). The cream may contain from 15 to 45 % of fat, preferably from 20 to 40% of fat, and even more preferably from 25 to 35% of fat. Preferably, the cream comprises from 1.6 to 5 wt% of proteins, more preferably from 2 to 4 wt%.

Optionally, the cream comprises a flavour ingredient. Suitable flavour ingredients include vanilla flavour; chocolate; fruit extracts or flavours, such as strawberry or lemon flavours; herbal extracts or flavours, such as mint or verbena; sweetener, such as sucrose or low- or non-caloric sweeteners. Preferably, the flavour ingredient is added to the cream prior to heat-treatment.

The preparation of the cream comprises a heat treatment, such as pasteurisation or sterilisation. Pasteurisation can be performed at about 92°C for about 6 minutes. Sterilisation can be performed at about 130°C for about 7 seconds. Preferably, the cream is pasteurised. The heat-treated cream undergoes a mild homogenisation. In an embodiment, the homogenisation is a single-stage homogenisation. The higher the homogenisation pressure the thicker will be the homogenised cream. If the homogenisation pressure is too high, this may even cause inversion of the cream emulsion, leading to butter (which is a water-in-oil emulsion). Therefore, the higher the fat content the lower should be the homogenisation pressure. For instance, given a fat content of 20%, the homogenisation pressure can go up to 10 MPa (100 bar). For a fat content of 34%, the homogenisation pressure can range from 4 to 6 MPa (40 to 60 bar). Homogenisation can be performed at a temperature of 35 to 70°C. The cream is homogenised under a homogenisation pressure lower than 6 MPa (60 bar), preferably from 4 to 6 MPa (40 to 60 bar).

In an embodiment, the cream may be fermented. In this case, it is desirable to stabilise the cream with a stabiliser composition, similar to the stabiliser composition used in the fermented dairy base mentioned above. Fermentation of the cream is performed following standard dairy processes. Fermented cream is also named sour cream. In this case, the cream is homogenised and sterilised prior to fermentation. Stabilisation prevents precipitation of the proteins, which could result in a powdery texture.

The cream is then cooled to 0.5 to 10°C, preferably to 4 to 7°C, and held up to 24 hours, preferably for about 8 to 15 hours. If the holding temperature is too high, then it may be difficult to whip the cream. If the holding temperature is too high, there is also a risk of microbiological contamination when using pasteurised cream.

Optionally, the cream is whipped to an overrun of 50 to 150%, such as 80 to 140%, and preferably above 100%. A standard aeration mixer can be used for whipping the cream. Suitable equipment includes aeration mixers supplied by AEROMIX or MONDOMIX.

The final steps of the process for the manufacture of the aerated dairy product comprise mixing the fermented dairy base with the cream. Either the fermented dairy base or the cream, or both, are whipped before mixing. Preferably, whipped cream is mixed together with the fermented dairy base. In another embodiment, whipped cream is mixed with whipped fermented dairy base. About 60 to 90 parts by weight of fermented dairy base are mixed with about 10 to 40 parts by weight of cream, preferably whipped cream. For instance, 70 to 85 parts by weight of fermented dairy base, preferably 75 to 83 parts by weight, and 15 to 30 parts by weight of cream, preferably 15 to 25 parts by weight, are mixed together.

Preferably, mixing is performed shortly after whipping. "Shortly after whipping" means less than about 10 minutes, preferably less than 5 minutes. Holding or storing the whipped fermented dairy base or the whipped cream is not desired because viscosity of the whipped product may increase over holding time, which makes it more difficult to mix the fermented dairy base and the cream without breaking the foam. Preferably, mixing is performed by continuous dynamic mixing. In preferred embodiments, mixing is performed within 1 minute after whipping. Preferably, mixing is performed immediately after whipping, such as less than 20 seconds after whipping.

Optionally, a fruit preparation can be also mixed with the (whipped) fermented dairy base and the (whipped) cream, to a level of up to 30 parts by weight, such as up to 20 parts by weight of fruit preparation.

Suitable fruits include apple, apricot, cherry, peach, pear, raspberry, and strawberry. Suitable preparations include concentrate, puree and syrup. Fruit juices and the like would not be recommended because they may have a negative impact on the texture of the aerated dairy product. For instance, the fruit preparation contains at least 40 % total solids.

An aerated dairy product is obtained, optionally comprising a fruit preparation. The aerated dairy product comprises 1.5 to 14 wt% of fat, and has an overrun of 10 to 60%, preferably between 30 to 45%, depending on the weight ratio and overrun of the whipped cream or whipped fermented dairy base. The density of the aerated dairy product ranges from 800 to 900 g/L. The aerated dairy product has a shelf life of 35 days in refrigerated conditions.

Preferably, the aerated dairy product does not contain emulsifiers. In particular, the aerated dairy product does not contain sodium stearyl lactylate nor lactylated blend of mono- and diglycerides.

The aerated dairy product is then pumped to a conventional filling line, and dosed into standard containers suitable for dairy products which are then closed by applying a seal on top of the container. For instance, the aerated dairy product can be dosed into single-serve containers, or into packs of single-serve containers. The aerated dairy product can also be dosed into multi-serve containers.

In a preferred embodiment, the process according to the invention comprises the steps of preparing a stabilised skim yogurt, preparing a pasteurised and mildly homogenised cream (preferably having a fat content from 30 to 40 wt%), whipping said cream to an overrun from 100 to 150%, and mixing from 75 to 85 parts by weight of said yogurt and from 15 to 25 parts by weight of whipped cream.

Also, the invention relates in part to an aerated dairy product comprising 1.5 to 14 wt% of fat, and having an overrun of 10 to 60%. The aerated dairy product has a shelf life of 35 days in refrigerated conditions. The density of the aerated dairy product ranges from 800 to 900 g/L.

The aerated dairy product requires storing under refrigerated conditions. The aerated dairy product is not a frozen product, in other words, it does not require storing under temperatures below 0°C to retain its organoleptic properties, especially its texture properties.

Preferably, the aerated dairy product comprises from 2 to 10 wt% of fat, and more preferably between 3 and 7.5 wt% of fat. The fat content depends mainly on the amount of whipped cream used in the preparation of the aerated dairy product. Indeed, the fermented dairy base is preferably prepared from skim milk.

The aerated dairy product has a Dornic acidity ranging from 100 to 108°D. The Dornic acidity is a measure of the lactic acid content of a dairy product. 1°D corresponds to 0.1 g of lactic acid per litre of milk. Measuring the Dornic acidity is a standard procedure in the dairy industry. The Dornic acidity may slightly increase over shelf life in refrigerated conditions, for instance from about 100°D to about 105°D. This is due to the residual activity of the lactic acid bacteria used to prepare the fermented dairy base. The post-acidification of the aerated dairy product during shelf life is very limited. This very slight increase over shelf life ensures that the taste of the aerated dairy product remains stable over shelf life, especially its mild acidity.

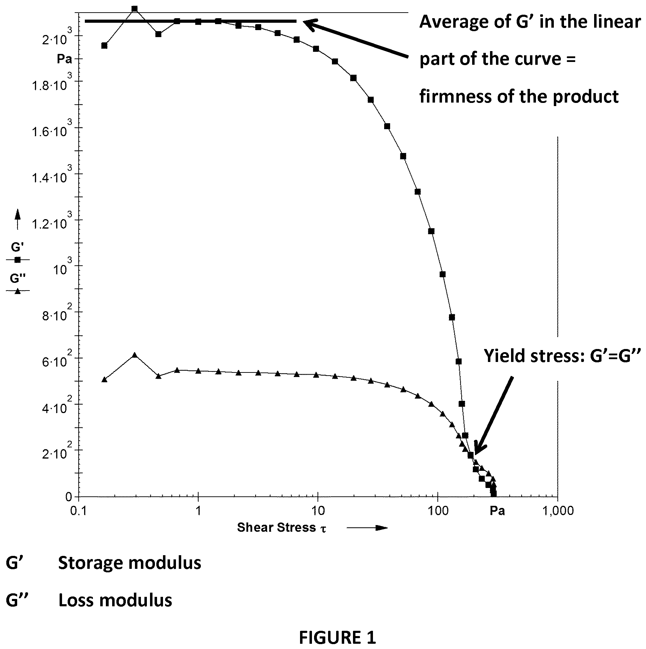

The yield stress gives an indication of the melting or sticky properties of a dairy product. The yield stress is the point where the storage modulus G' is equal to the loss modulus G" of the product. The storage modulus G' gives an indication of the firmness of the product. The firmness of the product is the average of the linear part of the curve representing the storage modulus as a function of shear stress. The storage modulus G' and the loss modulus G" were measured with an oscillation rheometer MCR101 (Anton Paar) with a measuring system PP50, accessories P-PTD200, and gap of 1 mm. The measure was performed at 8°C, with an amplitude of 0.01 to 500% (log scale) at 1 Hz. Figure 1 shows an example of the storage modulus G' (boxes) and loss curves G" (triangles) as a function of shear stress (logarithmic scale).

A yield stress lower than 200 Pa characterises a product which melts in the mouth after swallowing and which is not sticky. A yield stress greater than 200 Pa characterises a product which remains in the mouth and on the palate after swallowing. The aerated dairy product has a yield stress ranging from 135 to 160 Pa, preferably from 135 to 145 Pa.

The aerated dairy product has a mild acidic taste, and a light texture that melts in the mouth upon consumption, and does not coat the bucal cavity.

Those skilled in the art will understand that they can freely combine all features of the present invention disclosed herein. Further, features described for different embodiments of the present invention may be combined.

Further advantages and features of the present invention are apparent from the figures and non-limiting examples.

## EXAMPLES

### Example 1

A standard skim milk yogurt was prepared by culturing pasteurised (92°C, 6 minutes) and homogenised (200/20 bar at 70°C) skim milk with standard yogurt strains. A stable pH of 4.5 was reached after fermentation during 7h30 at 40°C. The yogurt was smoothed and cooled to a temperature of 12°C for storing.

In parallel, a 34% fat cream was pasteurised (92°C, 6 minutes) and homogenised (4 MPa (40 bar), 44°C). The cream was then whipped to reach an overrun of 120%.

Shortly after whipping, 19 wt% of whipped cream was mixed with 81 wt% of yogurt in a dynamic mixer, to obtain an aerated dairy product.

The mix had an overrun of about 35-40%. The mix was dosed into standard containers and stored under refrigeration (4-5°C) to assess shelf life.

A few days after production, syneresis was already observed. Therefore, this product was not considered as acceptable.

### Example 2

A stabilised skim milk yogurt was prepared by culturing pasteurised (92°C, 6 minutes) and homogenised (200/20 bar at 70°C) skim milk with standard yogurt strains. Before fermentation, gelatine and pectin were added to the liquid skim milk and held for hydration for about 20 minutes at 60°C. A stable pH of 4.5 was reached after fermentation during 7h30 at 40°C. The yogurt was smoothed and cooled to a temperature of 12°C for storing.

In parallel, a 34% fat cream was pasteurised (92°C, 6 minutes) and homogenised (4 MPa (40 bar), 44°C). The cream was then whipped to reach an overrun of 120%. Shortly after whipping, 19 wt% of whipped cream was mixed with 81 wt% of yogurt in a dynamic mixer, to obtain an aerated dairy product.

The aerated dairy product contained about 6.4 wt% of milk fat, 5 wt% of protein, 0.4 wt% of gelatine and 0.2 wt% of pectin.

The aerated dairy product had an overrun of about 35-40%. The mix was dosed into standard containers and stored under refrigeration (4-5°C) to assess shelf life. Details are provided in the table below. The product was shelf stable for at least 28 days, keeping a smooth and pleasant texture that melted in the mouth upon consumption.

|  | Unit | 14 days shelf life | 28 days shelf life |
|---|---|---|---|
| Dornic acidity | °D | 102 | 105 |
| Firmness | Pa | 1340 | 1444 |
| Yield stress | Pa | 138.5 | 141 |
| Syneresis | Visual observation | OK | OK |

### Example 3

A stabilised skim milk yogurt was prepared by culturing pasteurised (92°C, 6 minutes) and homogenised (200/20 bar at 70°C) skim milk with standard yogurt strains. Before fermentation, gelatine and pectin were added to the liquid skim milk and held for hydration for about 20 minutes at 60°C. A stable pH of 4.5 was reached after fermentation during 7h30 at 40°C. The yogurt was smoothed and cooled to a temperature of 12°C for storing.

In parallel, a 34% fat cream was pasteurised (92°C, 6 minutes) and homogenised (4 MPa (40 bar), 44°C). The cream was then whipped to reach an overrun of 120%. Shortly after whipping, 23 wt% of whipped cream was mixed with 77 wt% of yogurt in a dynamic mixer, to obtain an aerated dairy product.

The aerated dairy product contained about 6.4 wt% of milk fat, 5 wt% of protein, 0.4 wt% of gelatine and 0.2 wt% of pectin.

Then, 82 wt% of the aerated dairy product and 18 wt% of a sterilised strawberry puree were mixed together, to prepare a strawberry variant of the aerated dairy product.

The aerated dairy product with fruit had an overrun of about 35-40%. The mix was dosed into standard containers and stored under refrigeration (4-5°C) to assess shelf life.

The product was shelf stable for at least 28 days, keeping a smooth and pleasant texture that melted in the mouth upon consumption. No syneresis was observed.

### Example 4

A stabilised skim milk yogurt was prepared as in Examples 2 and 3.

In parallel, gelatine and pectin were mixed into a 34% fat cream. The stabilised cream was then homogenised (4 MPa (40 bar), 44°C) and sterilised (130°C, 7 seconds) before fermentation with standard sour cream strains. The cream was then whipped to reach an overrun of 120%. shortly after whipping, 19 wt% of whipped cream was mixed with 81 wt% of yogurt in a dynamic mixer, to obtain an aerated dairy product.

The aerated dairy product contained about 6.4 wt% of milk fat, 5 wt% of protein, 0.5 wt% of gelatine and 0.2 wt% of pectin.

The aerated dairy product had an overrun of about 35-40%. The mix was dosed into standard containers and stored under refrigeration (4-5°C) to assess shelf life. The product was shelf stable for at least 28 days, keeping a smooth and pleasant texture that melted in the mouth upon consumption. No syneresis was observed.

### Example 5

The product of Example 2 was compared with commercial dairy desserts, after 28 days of shelf life:

|  | Unit | Example 2 | GERVITA Whipped Cream | Chocolate SECRET DE MOUSSE |
|---|---|---|---|---|
| Firmness | Pa | 1444 | 8624 | 1225 |
| Yield stress | Pa | 141 | 297 | 231 |

This shows that the aerated dairy product prepared according the invention is much softer or less firm, than comparable commercial products. In addition, the aerated dairy product is less sticky in the mouth than comparable commercial products.

**Claims**

1. Process for the manufacture of an aerated dairy product comprising 1.5% to 14% by weight of fat, preferably 4 to 8% by weight of fat, comprising the steps of:

   - preparing a fermented dairy base comprising a stabiliser composition, said stabiliser composition comprising pectin, gelatine, cellulose, starch, hydrocolloids, or a mixture thereof,
   - preparing a cream, and homogenising said cream under a pressure lower than 6 MPa (60 bar),
   - whipping said fermented dairy base to an overrun of 25 to 130%, and/or whipping said cream to an overrun of 50 to 150%,
   - mixing 60 to 90 parts by weight of said fermented dairy base, 10 to 40 parts by weight of said cream, and up to 30 parts by weight of a flavour composition, where either or both of said fermented dairy base and said cream are whipped before mixing.

2. Process according to claim 1, wherein mixing is performed shortly after whipping of said fermented dairy base and/or said cream, preferably by continuous dynamic mixing.

3. Process according to claim 1 or 2, wherein the cream is pasteurised.

4. Process according to claim 1 or 2, wherein the cream further comprises a stabiliser composition and is sterilised.

5. Process according to any one of claims 1 to 4, wherein said cream comprises from 15 to 45% by weight of fat, preferably from 25 to 35% by weight of fat.

6. Process according to any one of claims 1 to 5, wherein said cream comprises from 1.6 to 5% by weight of proteins.

7. Process according to any one of claims 1 to 6, wherein said fermented dairy base comprises less than 3% by weight of fat.

8. Process according to any one of claims 1 to 7, wherein said fermented dairy base is fat-free.

9. Process according to any one of claims 1 to 8, wherein said aerated dairy product has an overrun of 10 to 60%.

**Patentansprüche**

1. Verfahren zum Herstellen eines mit Luft versetzten Milchprodukts, das 1,5 bis 14 Gew.-% Fett, vorzugsweise 4 bis 8 Gew.-% Fett umfasst, die folgenden Schritte umfassend:

   - Herstellen einer fermentierten Milchbasis, die eine Stabilisatorzusammensetzung umfasst, wobei die Stabilisatorzusammensetzung Pektin, Gelatine, Cellulose, Stärke, Hydrokolloide oder eine Mischung davon umfasst,
   - Herstellen von Rahm und Homogenisieren des Rahms unter einem Druck von unter 6 MPa (60 bar),
   - Aufschlagen der fermentierten Milchbasis auf einen Lufteinschlag von 25 bis 130 % und/oder Aufschlagen des Rahms auf einen Lufteinschlag von 50 bis 150 %,
   - Vermischen von 60 bis 90 Gewichtsteilen der fermentierten Milchbasis, 10 bis 40 Gewichtsteilen des Rahms und bis zu 30 Gewichtsteilen einer Geschmacksstoffzusammensetzung, wobei die fermentierte Milchbasis und/oder der Rahm vor dem Mischen aufgeschlagen wird/werden.

**2.** Verfahren nach Anspruch 1, wobei das Mischen kurz nach dem Aufschlagen der fermentierten Milchbasis und/oder des Rahms durchgeführt wird, vorzugsweise durch kontinuierliches dynamisches Mischen.

**3.** Vorrichtung nach Anspruch 1 oder 2, wobei der Rahm pasteurisiert ist.

**4.** Verfahren nach Anspruch 1 oder 2, wobei der Rahm ferner eine Stabilisatorzusammensetzung umfasst und sterilisiert ist.

**5.** Verfahren nach einem der Ansprüche 1 bis 4, wobei der Rahm von 15 bis 45 Gew.-% Fett, vorzugsweise von 25 bis 35 Gew.-% Fett umfasst.

**6.** Verfahren nach einem der Ansprüche 1 bis 5, wobei der Rahm von 1,6 bis 5 Gew.-% Proteine umfasst.

**7.** Verfahren nach einem der Ansprüche 1 bis 6, wobei die fermentierte Milchbasis weniger als 3 Gew.-% Fett umfasst.

**8.** Verfahren nach einem der Ansprüche 1 bis 7, wobei die fermentierte Milchbasis fettfrei ist.

**9.** Verfahren nach einem der Ansprüche 1 bis 8, wobei das mit Luft versetzte Milchprodukt einen Lufteinschlag von 10 bis 60 % aufweist.

## Revendications

**1.** Procédé de fabrication d'un produit laitier aéré comprenant 1,5 % à 14 % en poids de matière grasse, de préférence 4 à 8 % en poids de matière grasse, comprenant les étapes consistant à :

- préparer une base laitière fermentée comprenant une composition de stabilisant, ladite composition de stabilisant comprenant de la pectine, de la gélatine, de la cellulose, de l'amidon, des hydrocolloïdes, ou un mélange de ceux-ci,
- préparer une crème, et homogénéiser ladite crème sous une pression inférieure à 6 MPa (60 bar),
- fouetter ladite base laitière fermentée à un taux de foisonnement de 25 à 130 %, et/ou fouetter ladite crème à un taux de foisonnement de 50 à 150 %,
- mélanger 60 à 90 parties en poids de ladite base laitière fermentée, 10 à 40 parties en poids de ladite crème, et jusqu'à 30 parties en poids d'une composition d'arôme, où l'une ou/et l'autre de ladite base laitière fermentée et de ladite crème sont fouettées avant mélange.

**2.** Procédé selon la revendication 1, dans lequel le mélange est effectué peu de temps après le fouettage de ladite base laitière fermentée et/ou de ladite crème, de préférence par un mélange dynamique continu.

**3.** Procédé selon la revendication 1 ou 2, dans lequel la crème est pasteurisée.

**4.** Procédé selon la revendication 1 ou 2, dans lequel la crème comprend en outre une composition de stabilisant et est stérilisée.

**5.** Procédé selon l'une quelconque des revendications 1 à 4, dans lequel ladite crème comprend de 15 à 45 % en poids de matière grasse, de préférence de 25 à 35 % en poids de matière grasse.

**6.** Procédé selon l'une quelconque des revendications 1 à 5, dans lequel ladite crème comprend de 1,6 à 5 % en poids de protéines.

**7.** Procédé selon l'une quelconque des revendications 1 à 6, dans lequel ladite base laitière fermentée comprend moins de 3 % en poids de matière grasse.

**8.** Procédé selon l'une quelconque des revendications 1 à 7, dans lequel ladite base laitière fermentée est sans matière grasse.

**9.** Procédé selon l'une quelconque des revendications 1 à 8, dans lequel ledit produit laitier aéré a un taux de foisonnement de 10 à 60 %.

FIGURE 1

G'    Storage modulus

G''   Loss modulus

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2850534 A1
- EP 1733622 B1
- WO 03028471 A1
- EP 0777969 A1
- US 2006068075 A1
- DE 19654625